# EUROPEAN PATENT APPLICATION

(11) **EP 1 806 209 A2**
(43) Date of publication of application: **11.07.2007**
(21) Application number: 06124735.9
(22) Date of filing: 24.11.2006
(51) Int. Cl.: B25J 5/00, B62D 61/12

(54) **Travelling robot**

(30) Priority: 29.11.2005 KR 20050114918; 04.05.2006 KR 20060040566
(71) Applicant: Samsung Electronics Co., Ltd., Suwon-si, Gyeonggi-Do (KR)
(72) Inventor: Lee, Youn-baek, Gyeonggi-do (KR); Yang, Soo-sang, Suwon-si Gyeonggi-do (KR); Kim, Yong-jae, Seoul (KR); Oh, Yeon-taek, Yongin-si Gyeonggi-do (KR); Kim, Jeong-hun, Suwon-si Gyeonggi-do (KR)
(74) Representative: Grey, Ian Michael

(57) **Abstract**

A travelling robot (1) includes a main body frame (10) having a front wheel (20) supported in a front portion thereof in a travelling direction, a first travelling part (30a) having a first driving wheel (40a) to drive in the travelling direction, a first rear wheel (50a) disposed in a rear side of the first driving wheel (40a), and a first wheel frame (60a) to support the first driving wheel (40a) and the first rear wheel (50a), a second travelling part (30b) having a second driving wheel (40b) to drive in the travelling direction independently from the first driving wheel (40a), a second rear wheel (50b) disposed in a rear side of the second driving wheel (40b), and a second wheel frame (60b) to support the second driving wheel (40b) and the second rear wheel (50b), a first interlocking hinge part (70a) to rotatably support the first wheel frame (60a) to the main body frame (10) to have a hinge axis of a perpendicular direction with respect to the travelling direction, and a second interlocking hinge part (70b) to rotatably support the second wheel frame (60b) to the main body frame (10) independently from the first interlocking hinge part (70a) to have a hinge axis of the same direction as the first interlocking hinge part (70a).

## Description

The present invention relates to a conveyance mechanism for a mobile robot, comprising a main body, at least one front wheel.

Robots are widely used in industrial, military, domestic or other fields and those which are mobile require a travelling mechanism of some sort. Therefore, technologies have been developed in the field of robot travelling mechanisms which allow a robot to smoothly travel in the horizontal state, and thereby minimizing shaking of the robot on an uneven surface such as a travelling surface having a stair.

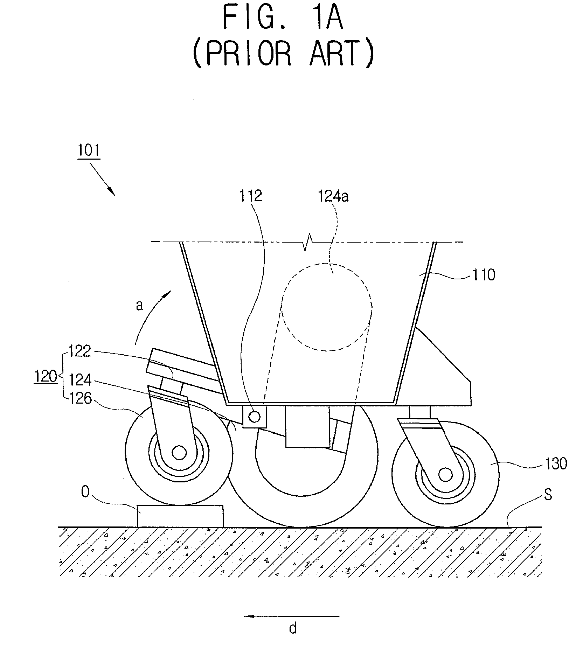

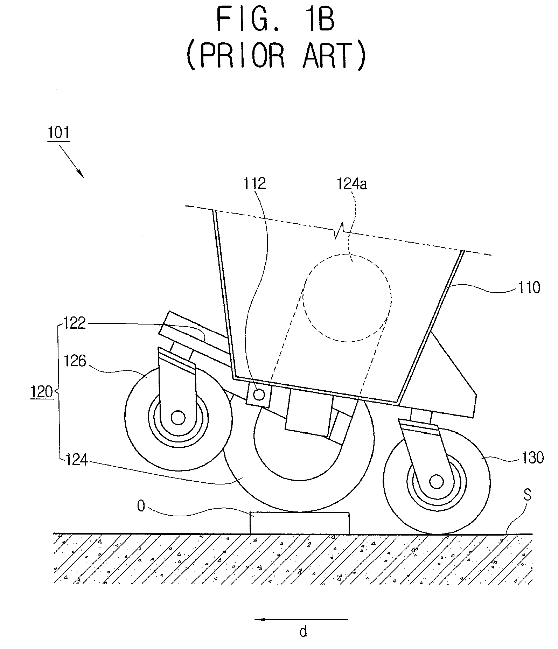

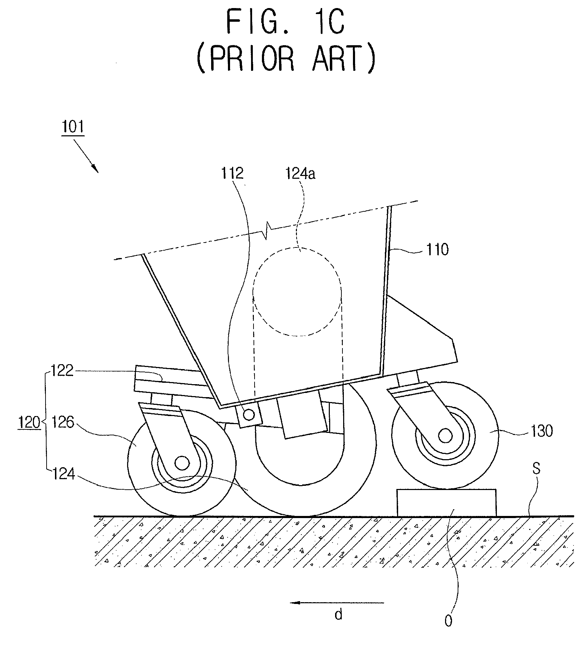

Figures 1A to 1C schematically illustrate travelling states of a conventional travelling robot. A travelling robot 101 includes a housing 110, a rear wheel 130 and a travelling part 120, and travels on a travelling surface S. The rear wheel 130 is disposed in a rear side of the housing 110 relative to a travelling direction "d". The rear wheel 130 rotates idly and supports the housing 110 on the travelling surface S.

The travelling part 120 includes a frame 122, two driving wheels 124, and a front wheel 126. The frame 122 is rotatably coupled with the housing 110 by a hinge part 112. The two driving wheels 124 are disposed respectively in opposite sides of the frame 122. The driving wheel 124 receives a driving force from a driving motor 124a and moves the housing 110 in the travelling direction "d." The front wheel 126 is supported by a front side of the frame 122. The front wheel 126 is disposed to rotate idly and supports the housing 110 on the travelling surface S. Thus, the frame 122 rotates about a centre of the hinge part 112 with respect to the housing 110, and accordingly, the driving wheel 124 and the front wheel 126 move together with the frame 122. A conventional travelling robot is disclosed in U.S. Patent No. 5,350,033.

However, a travelling ability of the travelling robot 101 is decreased when the travelling robot 101 travels on a travelling surface S having an obstacle O such as a stair. As illustrated in FIG. 1A, when the travelling robot 101 crosses the obstacle O, the front wheel 126 climbs on the obstacle O. At this time, the frame 122 rotates about a centre of the hinge part 112 in a direction "a." Accordingly, the housing 110 may remain horizontal.

As illustrated in Figure 1B, when the travelling robot 101 further travels in the travelling direction "d" the driving wheel 124 climbs on the obstacle O, and the front wheel 126 becomes spaced from the travelling surface S. A weight centre of the travelling robot 101 moves backward to be disposed over the rear wheel 130. Accordingly, the driving wheel 124 cannot have a sufficient traction force to move the travelling robot 101 forward, and the driving wheel 124 slides on the travelling surface S resulting in the travelling robot 101 being unable to cross the obstacle O smoothly.

In addition, as illustrated in FIG. 1C, when the travelling robot 101 more further travels in the travelling direction "d", the driving wheel 124 crosses the obstacle ○, and the rear wheel 130 climbs on the obstacle O. The weight centre of the travelling robot 101 moves forward rapidly. Accordingly, the front wheel 126 which was previously spaced from the travelling surface S, may collide with the travelling surface S, making the housing 110 shake and possibly changing the position of the travelling robot 101, thereby causing subsequent travelling errors.

Especially, the travelling ability of the travelling robot 101 is further decreased when the opposite driving wheels 124 cross obstacles having different levels (heights) from the travelling surface S. Since the one front wheel 126 and the two driving wheels 124 are fixedly supported by the frame 122 relative to each other, it is difficult for the opposite travelling wheels 124 to adapt to the different levels of the obstacles. Accordingly, the front wheel 126 becomes spaced from the travelling surface S, and the above-described sliding of the driving wheel 124 on the surface S and the shaking of the housing 110 occur.

Further, the travelling robot 101 becomes unstable because of the large change in the weight centre of the travelling robot 101.

The present invention provides a travelling robot having improved travelling ability on an uneven surface, improved stability on the ground/surface on which it travels, and provides a travelling robot which can protect its main body from a shock generated while climbing on a stair surface.

Additional aspects and advantages of the present general inventive concept will be set forth in part in the description which follows and, in part, will be obvious from the description, or may be learned by practice of the general inventive concept.

The present invention is characterised by first and second wheeled units, each wheeled unit comprising a driven wheel and a rear support wheel mounted to a support frame, each support frame being pivotably secured to the main body so as to pivot about an axis perpendicular to the direction of travel of the conveyance mechanism in use, wherein the first and second wheeled units are pivotable relative to the main body about parallel respective axes, independently of each other.

Preferably, the pivot axes of the first and second wheeled units are coaxial. the pivot axes of the first and second wheeled units are coaxial and conveniently, the first and second wheeled units are disposed proximate lateral sides of the main body. Preferably, the first and second wheeled units are disposed symmetrically about a centre line of the main body.

In a preferred embodiment, the driven wheel and the rear support wheel of each wheeled unit are disposed on opposite sides of the respective support frame pivot and preferably the driven wheel of each wheeled unit is disposed closer to the support frame pivot than the respective rear support wheel.

In a preferred embodiment, the first and second support frames each respectively comprise a driving wheel portion supporting the driving wheel, a rear wheel portion supporting the rear support wheel and, a link member linking the driving wheel and rear wheel portions.

Conveniently, the first and second driving wheel portions respectively comprise a driving shaft supporting the driving wheel.

Preferably, the first and second driving wheel portions respectively comprise a driving motor connected to the driving wheel to provide driving power thereto.

Preferably, each wheeled unit further comprises a respective suspension mechanism disposed between the main body and the support frame to elastically bias the driving wheel away from the main body.

The foregoing and/or other aspects of the present invention may also be achieved by providing a travelling robot comprising a main body frame having a front wheel supported in a front portion thereof in a travelling direction, a first travelling part having a first driving wheel to drive the main body frame in the travelling direction, a first rear wheel disposed in a rear side of the first driving wheel, and a first wheel frame to support the first driving wheel and the first rear wheel, a second travelling part having a second driving wheel to drive the main body frame in the travelling direction independently from the first driving wheel, a second rear wheel disposed in a rear side of the second driving wheel, and a second wheel frame to support the second driving wheel and the second rear wheel, a first interlocking hinge part to rotatably support the first wheel frame to the main body frame to have a first hinge axis of a perpendicular direction with respect to the travelling direction, and a second interlocking hinge part to rotatably support the second wheel frame to the main body frame independently from the first interlocking hinge part to have a second hinge axis of the same direction as the first interlocking hinge part.

The first interlocking hinge part and the second interlocking hinge part may be disposed to the main body frame through the hinge axes and the hinge axes may be disposed on a same line.

The first travelling part and the second travelling part may be symmetrical with respect to the travelling direction.

The first interlocking hinge part and the second interlocking hinge part may be disposed within a predetermined distance from the weight centre of the travelling robot in the travelling direction.

The first interlocking hinge part and the second interlocking hinge part may be disposed backward in the travelling direction from the weight centre of the travelling robot.

The first wheel frame and the second wheel frame may include main frames to respectively support the first driving wheel and the second driving wheel, sub frames to respectively support the first rear wheel and the second rear wheel, and linking members to respectively 1 link the main frames with the sub frames. The main frames may include driving shaft parts to respectively support the first driving wheel and the second driving wheel, frame bodies respectively extending upward and backward in the travelling direction from the driving shaft parts, and coupling parts respectively coupled with the linking members.

The present invention also provides a travelling robot comprising a main body frame having a front wheel supported in a front portion thereof in a travelling direction, a plurality of drivers each of which comprises a driving wheel, a rear wheel disposed in a rear side of the driving wheel, and a wheel frame to connect and support the driving wheel and the rear wheel and driven independently from each other an interlocking hinge part to rotatably support the wheel frame of the respective drivers to the main body frame, and a suspension part provided between the main body frame and the wheel frame and allowing the driving wheel to be elastically biased toward a travelling surface.

The wheel frame may include a main frame to support the driving wheel, a sub frame to support the rear wheel, and a linking member to link the main frame with the sub frame, the interlocking hinge part may be provided between opposite end parts of the main frame, and the suspension part may be coupled to the main frame such that the driving wheel is disposed between the interlocking hinge part and the suspension part.

The suspension part may include an upper holder supported by a bracket cover provided in the main body frame, a lower holder rotatably supported by the main frame, an elastic member interposed between the upper and lower holders, and a guide shaft provided between the upper and lower holders along a stretching direction of the elastic member to prevent the elastic member from being bent.

The bracket cover may protrude from the main frame and is oppositely spaced apart from the lower holder at a predetermined distance.

The bracket cover may be provided in a wheel cover detachably coupled to the main frame.

The present invention also provides a travelling robot including a main body frame having a front wheel formed at a front portion thereof, and having a shaft formed at a middle portion thereof, a main frame rotatably connected to the shaft, a driving wheel rotatably connected to a first end of the main frame, and a rear wheel connected to a second end of the main frame to be disposed at a rear portion of the main body frame.

Preferred embodiments of the present invention, will now be described, by way of example only, with reference to Figures 2-13 of the accompanying drawings, in which:
Figures 1A to 1C schematically illustrate travelling states of a conventional travelling robot;
Figure 2 is a perspective view illustrating a travelling robot according to an embodiment of the present general invention concept
Figure 3 is a front view illustrating the travelling robot in Figure 2;
Figure 4 is a side view illustrating the travelling robot in Figure 2;
Figure 5 is an exploded perspective view illustrating a portion of the travelling robot in Figure 2;
Figures 6A and 6B are side views illustrating travelling states of the travelling robot in Figure 2;
Figure 7 is a front view illustrating another travelling state of the travelling robot in Figure 2;
Figure 8 is a perspective view illustrating a travelling robot according to another embodiment of the present invention;
Figure 9 is a front view illustrating the travelling robot in Figure 8;
Figure 10 is a side view illustrating the travelling robot in Figure 8;
Figure 11 is an exploded perspective view illustrating a portion of the travelling robot in Figure 8;
Figures 12A and 12B are side views illustrating travelling states of the travelling robot in Figure 9; and
Figure 13 is a side view illustrating a third travelling state of the travelling robot in Figure 9.

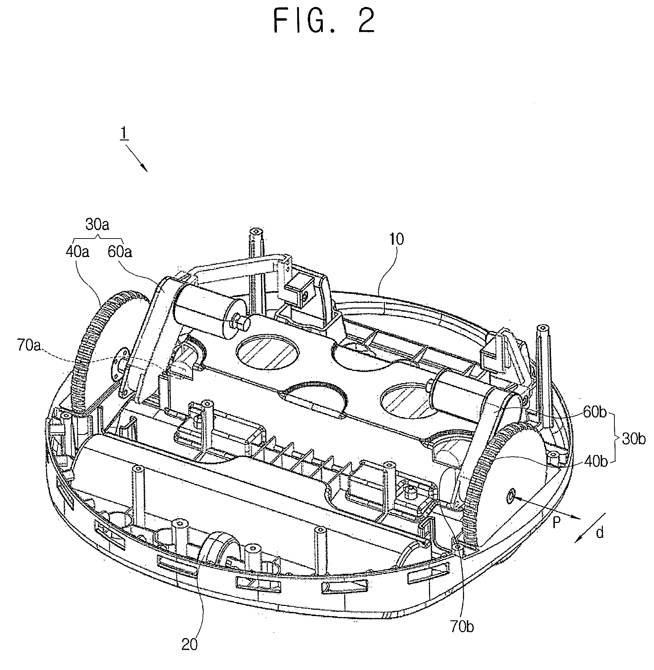

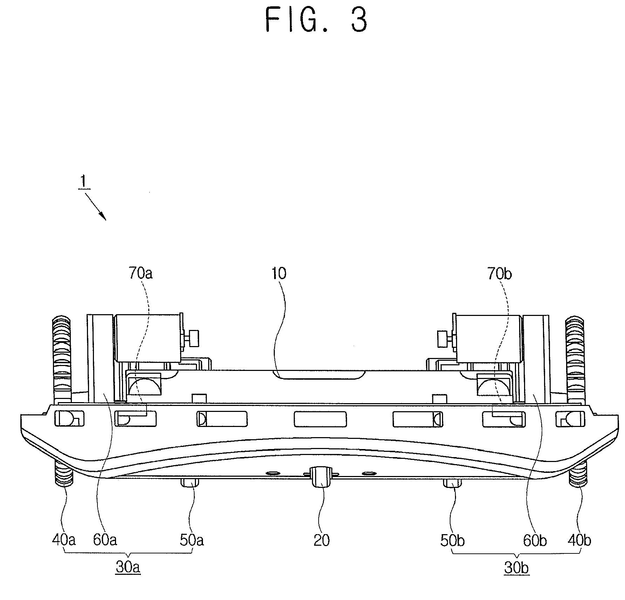

Referring now to Figures 2 and 3, the travelling robot 1 includes a main body frame 10, a front wheel 20, a first travelling part 30a, a second travelling part 30b, a first interlocking hinge part 70a, and a second interlocking hinge part 70b. The travelling robot 1 may be a cleaning robot including a cleaning part (not shown) provided to the main body frame 10 to clean a travelling surface, a displaying robot including a displaying part (not shown) provided thereto, or other robots performing other function or operations.

The front wheel 20 is supported on a front side of the main body frame 10 relative to a travelling direction "d". One front wheel 20 is shown, but alternatively, a plurality of the front wheels 20 may be disposed along a perpendicular direction with respect to the travelling direction "d." The front wheel 20 may have a steering function.

The first travelling part 30a includes a first driving wheel 40a, a first rear wheel 50a disposed inside and rearwards of the first driving wheel 40a, and a first wheel frame 60a to support the first driving wheel 40a and the first rear wheel 50a. The second travelling part 30b includes a second driving wheel 40b independent with respect to the first driving wheel 40a, a second rear wheel 50b disposed inside and rearwards of the second driving wheel 40b, and a second wheel frame 60b to support the second driving wheel 40b and the second rear wheel 50b. The first travelling part 30a and the second travelling part 30b are disposed respectively in opposite sides of the main body frame 10. The first travelling part 30a and the second travelling part 30b may also move the travelling robot 1 in an opposite direction to the travelling direction "d".

The first interlocking hinge part 70a rotatably supports the first wheel frame 60a to the main body frame 10 with a pivot axis in a direction "p" which is perpendicular to the travelling direction "d" and is the same direction as a shaft axis of the first driving wheel 40a. Accordingly, the first wheel frame 60a rotates about the first interlocking hinge part 70a with respect to the main body frame 10 in response to undulations of the travelling surface on which the travelling robot 1 travels, and thus, the first driving wheel 40a and the first rear wheel 50a may rotate together with the first wheel frame 60a.

The second interlocking hinge part 70b rotatably supports the second wheel frame 60b to the main body frame 10 independently of the first interlocking hinge part 70a and has a pivot axis of the same direction as the first interlocking hinge part 70a. Accordingly, the second wheel frame 60b rotates about the second interlocking hinge part 70b with respect to the main body frame 10 in response to undulations on the travelling surface on which the travelling robot 1 travels, and thus, the second driving wheel 40b and the second rear wheel 50b may rotate together with the second wheel frame 60b.

The first interlocking hinge part 70a and the second interlocking hinge part 70b rotate the first wheel frame 60a and the second wheel frame 60b with respect to the main body frame 10 respectively and independently of each other. Also, the first driving wheel 40a and the second driving wheel 40b drive independently. Accordingly, in the case that the first travelling part 30a and the second travelling part 30b respectively travel on travelling surfaces of different levels, the first interlocking hinge part 70a and the second interlocking hinge part 70b may rotate respectively and independently of each other to correspond to the travelling surface, and thus, the first travelling part 30a and the second travelling part 30b can travel smoothly on their respective portions of travelling surface. That is, the travelling surface may include a first travelling surface along which the first driving wheel 40a moves, and a second travelling surface along which the second driving wheel 40b moves, and the travelling robot 1 moves along the direct "d".

The first interlocking hinge part 70a and the second interlocking hinge part 70b are disposed respectively in the main body frame 10 such that the respective hinge axes thereof are disposed coaxially. However, alternatively, the first interlocking hinge part 70a and the second interlocking hinge part 70b may be disposed in different portions of the main body frame 10 as long as the hinge/pivot axes thereof are perpendicular to the travelling direction "d".

The first travelling part 30a and the second travelling part 30b are symmetrical with respect to the travelling direction "d." That is, the first driving wheel 40a and the second driving wheel 40b, the first rear wheel 50a and the second rear wheel 50b, and the first wheel frame 60a and the second wheel frame 60b are respectively symmetrical with respect to a centre line of the travelling robot parallel to the travelling direction "d". However, alternatively, the first travelling part 30a and the second travelling part 30b may not be symmetrical. The first travelling surface and the second travelling surface may be disposed opposite sides of the centre line of the travelling direction "d".

The first interlocking hinge part 70a and the second interlocking hinge part 70b may be disposed within a predetermined distance from a weight centre of the travelling robot 1 with respect to travelling direction "d". That is, a the weight centre of the travelling robot 1 may be disposed adjacent to a position in which the first interlocking hinge part 70a and the second interlocking hinge part 70b are disposed to the main body frame 10. Accordingly, traction forces of the first driving wheel 40a and the second driving wheel 40b against the travelling surface can increase. Also, when the first interlocking hinge part 70a and the second interlocking hinge part 70b rotate with respect to the main body frame 10 as the travelling robot 1 travels on an uneven surface, variation of the weight centre of the travelling robot 1 can be minimized for the first driving wheel 40a and the second driving wheel 40b to maintain the sufficient traction force against the travelling surface. Also, the main body frame 10 can be prevented from shaking, and thus, a travelling ability of the travelling robot 1 can be enhanced.

The first interlocking hinge part 70a and the second interlocking hinge part 70b may be disposed in a rear position in the travelling direction "d" from the weight centre of the travelling robot 1. That is, the weight centre thereof may be disposed in front of the position in which the first interlocking hinge part 70a and the second interlocking hinge part 70b are disposed in the main body frame 10. However, alternatively, the first interlocking hinge part 70a and the second interlocking hinge part 70b may be disposed in front of the weight centre of the travelling robot 1.

Alternatively, the travelling robot 1 may include at least three travelling parts arranged along the perpendicular direction with respect to the travelling direction "d" and at least three interlocking hinge parts to support the corresponding travelling part to the main body frame 10 respectively. Here, the travelling parts and the interlocking hinge parts drive independently and respectively.

Hereinafter, a portion of the travelling robot 1 according to the present embodiment will be described by referring to Figures 2 to 5. For convenience, the first travelling part 30a and the second travelling part 30b are referred to as a travelling part 30, the first driving wheel 40a and the second driving wheel 40b as a driving wheel 40, the first rear wheel 50a and the second rear wheel 50b as a rear wheel 50, the first wheel frame 60a and the second wheel frame 60b as a wheel frame 60, and the first interlocking hinge part 70a and the second interlocking hinge part 70b as interlocking hinge part 70.

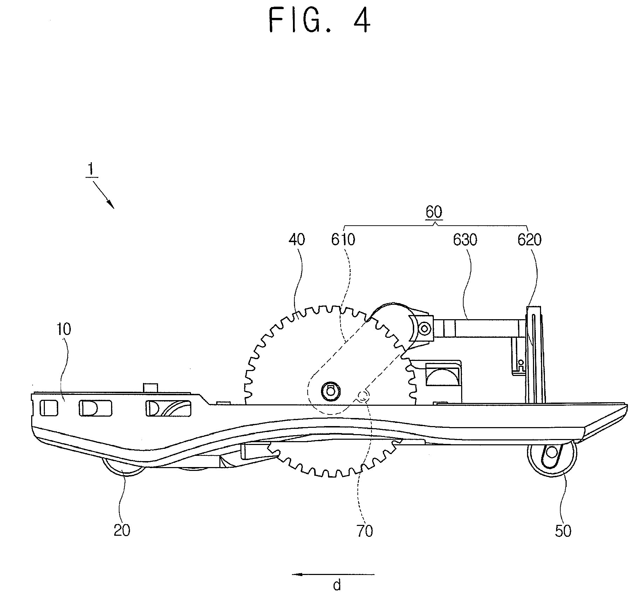

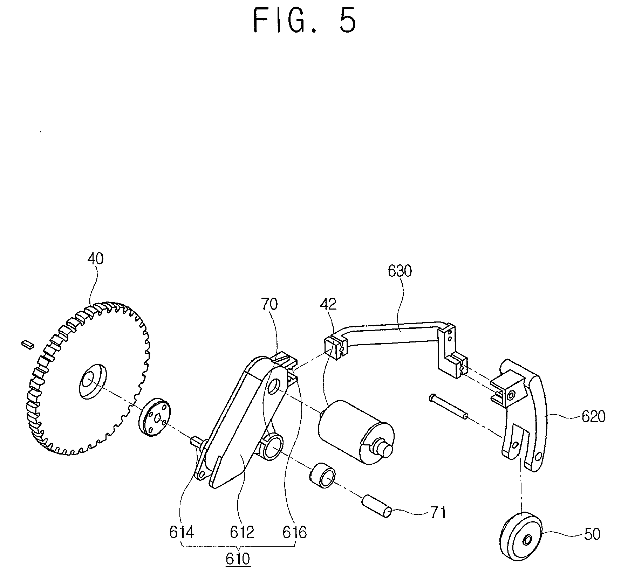

Referring to Figures 4 and 5, the wheel frame 60 includes a main frame 610 to support the driving wheel 40, a sub frame 620 to support the rear wheel 50, and a linking member 630 to link the main frame 610 with the sub frame 620.

The main frame 610 includes a driving shaft part 614 to support the driving wheel 40, a frame body 612 extending upward and backward with respect to the travelling direction "d" from the driving shaft part 614, and a coupling part 616 coupled with the linking member 630. The coupling part 616 couples the linking member 630 to the main frame 610 so that the linking member 630 may move together with the main frame 610. A driving motor 42 is disposed in a portion of the frame body 612 to drive the driving wheel 40. The main frame 610 may be provided as a gear box to connect the driving motor 42 with the driving wheel 40. The linking member 630 and the sub frame 620 are coupled to each other to move together. Thus, the wheel frame 60 can rotate about the interlocking hinge part 70 with respect to the main body frame 10.

The interlocking hinge part 70 is disposed in the frame body 612 downward and forward with respect to the travelling direction "d" from the coupling part 616. That is, the interlocking hinge part 70 is disposed adjacent to the driving shaft part 614 connected to the driving wheel 40 and is rotatably connected to the main body frame 10 through a shaft 71. A rotation radius of the driving wheel 40 with respect to the interlocking hinge part 70 is smaller than that of the rear wheel 50 with respect to the interlocking hinge part 70. That is, a distance between the driving wheel 40 and the interlocking hinge part 70 is shorter then a distance between the interlocking hinge part 70 and rear wheel 50. Accordingly, the traction force of the driving wheel 40 can increase.

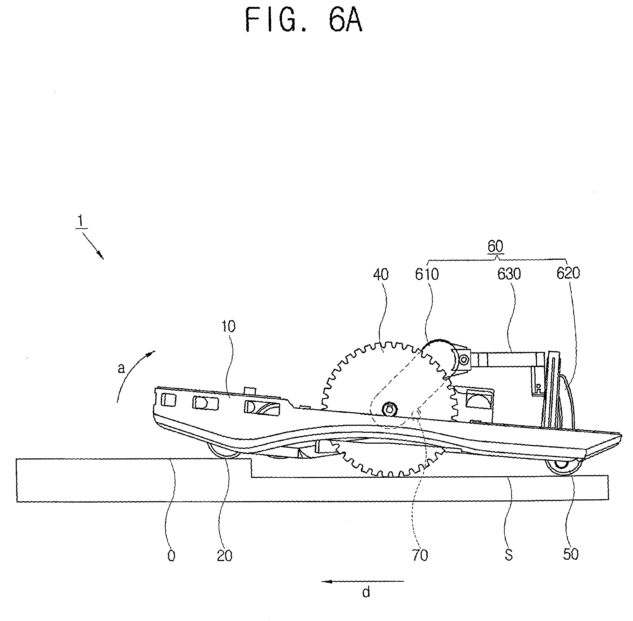

Hereinafter, an operation of the travelling robot 1 according to the present invention will described with reference to Figures 6A to 7.

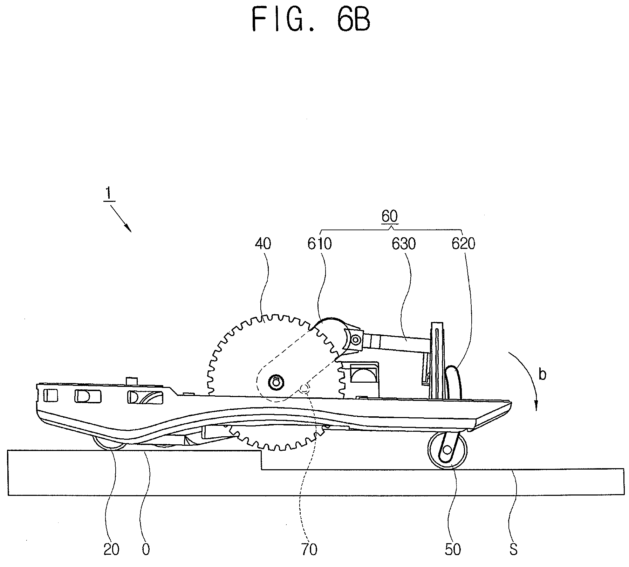

Referring to Figures 6A and 6B, the travelling robot 1 travels in direction "d" along a travelling surface S, the travelling surface S having a stair surface O protruding therefrom. As the travelling robot 1 travels along in the travelling direction "d", the front wheel 20 climbs on the stair surface O. At this time, the main body frame 10 rotates about the interlocking hinge part 70 with respect to the wheel frame 60 in a direction "a." Thus, the driving wheel 40 and the rear wheel 50 can support the main body frame 10 on the travelling surface S, and the driving wheel 40 can maintain sufficient traction force.

As illustrated in Figure 6B, as the travelling robot 1 further travels along the travelling direction "d", the driving wheel 40 climbs on the stair surface O, and the rear wheel 50 remains on the travelling surface S. At this time, the wheel frame 60 rotates about the interlocking hinge part 70 with respect to the main body frame 10 in a direction "b". Thus, the rear wheel 50 protrudes further toward the travelling surface S from the main body frame 10 to contact the travelling surface S and to support the main body frame 10 with the driving wheel 40 against the travelling surface S. Also, the front wheel 20 can maintain contact with the stair surface ○. The driving wheel 40 may maintain the sufficient traction force because a weight centre of the travelling robot 1 is disposed around the interlocking hinge part 70 adjacent to the driving wheel 40.

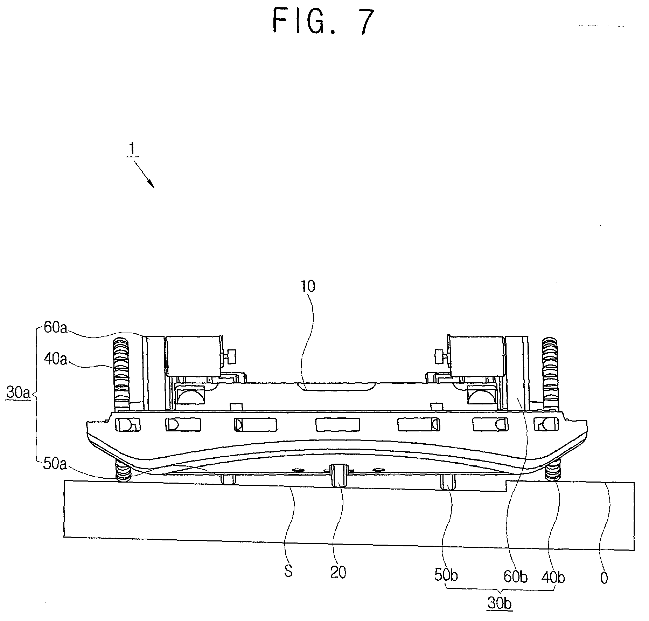

Referring to Figure 7, the driving wheels 40a and 40b are able to travel respectively on travelling surfaces of different levels. The first driving wheel 40a travels on a travelling surface S, and the second driving wheel 40b travels on a stair surface O protruding from the travelling surface S.

The first interlocking hinge part 70a and the second interlocking hinge part 70b rotate independently of each other, so that the first travelling part 30a and the second travelling part 30b may respectively travel properly on the travelling surface S and the stair surface O. The first driving wheel 40a and the second driving wheel 40b can maintain sufficient traction force respectively, and the front wheel 20 can maintain contact with the travelling surfaces, to prevent sliding. Also, the first rear wheel 50a and the second rear wheel 50b can contact the travelling surface S and the stair surface O respectively, and to thereby support the main body frame 10 stably.

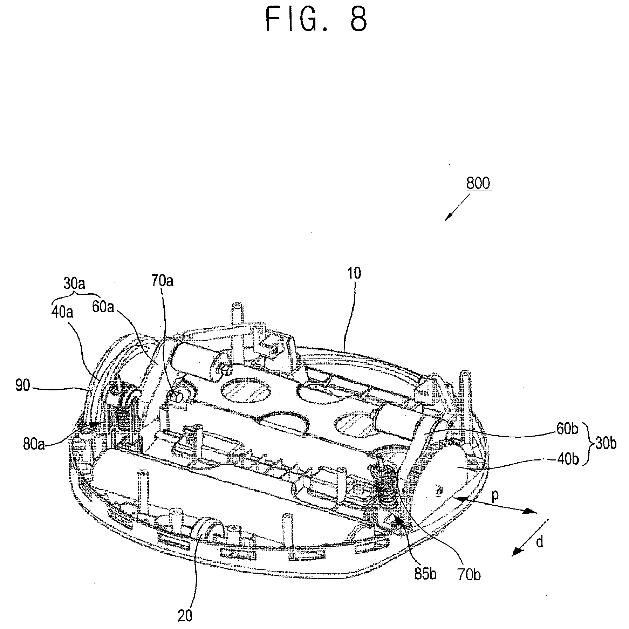

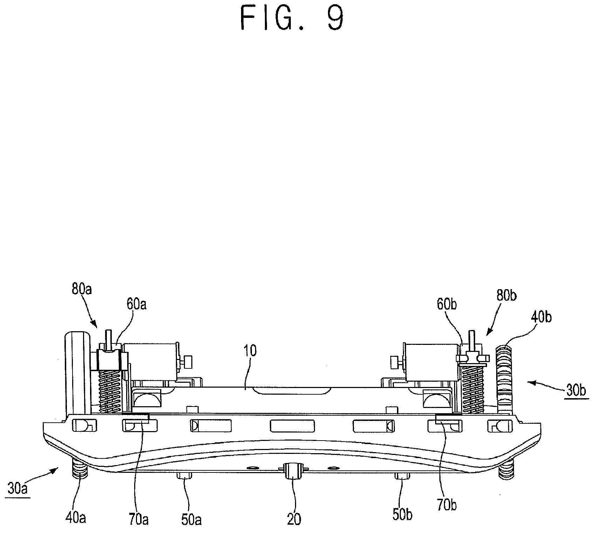

Referring now to Figures 8 and 9, a travelling robot 800 according to a second embodiment of the invention includes a main body frame 10, a front wheel 20, a first travelling part 30a, a second travelling part 30b, a first interlocking hinge part 70a, a second interlocking hinge part 70b, a first suspension part 80a, and a second suspension part 80b. The travelling robot 800 comprises the first and second suspension parts 80a and 80b and a wheel cover 90 in addition to the components already described above with reference to the first embodiment of the travelling robot 1. Thus, repetitive descriptions of like components will be omitted.

The first suspension part 80a allows a first driving wheel 40a to rotate with respect to the first interlocking hinge part 70a to come into maximum contact with a travelling surface. That is, the first suspension part 80a is placed between the main body frame 10 and a first wheel frame 60a, so that the first driving wheel 40a is elastically biased toward the travelling surface. The first suspension part 80a may be placed inside the first driving wheel 40a and in front of the first wheel frame 60a without obstructing the first driving wheel 40a.

The second suspension part 80b allows a second driving wheel 40b to rotate with respect to the second interlocking hinge part 70b independently from the first interlocking hinge part 70a to come into maximum contact with the travelling surface. That is, the second suspension part 80b is placed between the main body frame 10 and a second wheel frame 60b so that the second driving wheel 40b is elastically biased toward the travelling surface. The second suspension part 80b may be placed inside the second driving wheel 40b and in front of the second wheel frame 60b without obstructing the second driving wheel 40b.

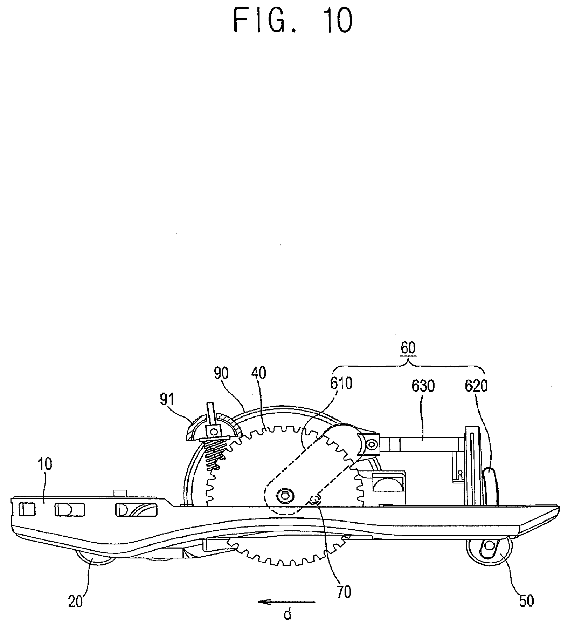

Hereinafter, a portion of the travelling robot 800 according to the present embodiment will be described with reference to Figures 8 to 11. The first and second travelling parts 30a and 30b may be symmetrical to each other. For convenience, in Figure 9, the first travelling part 30a and the second travelling part 30b are referred to as a travelling part 30, the first driving wheel 40a and the second driving wheel 40b are referred to as a driving wheel 40, the first rear wheel 50a and the second rear wheel 50b are referred to as a rear wheel 50, the first wheel frame 60a and the second wheel frame 60b are referred to as a wheel frame 60, the first interlocking hinge part 70a and the second interlocking hinge part 70b are referred to as a interlocking hinge part 70, and the first suspension part 80a and the second suspension part 80b are referred to as a suspension part 80.

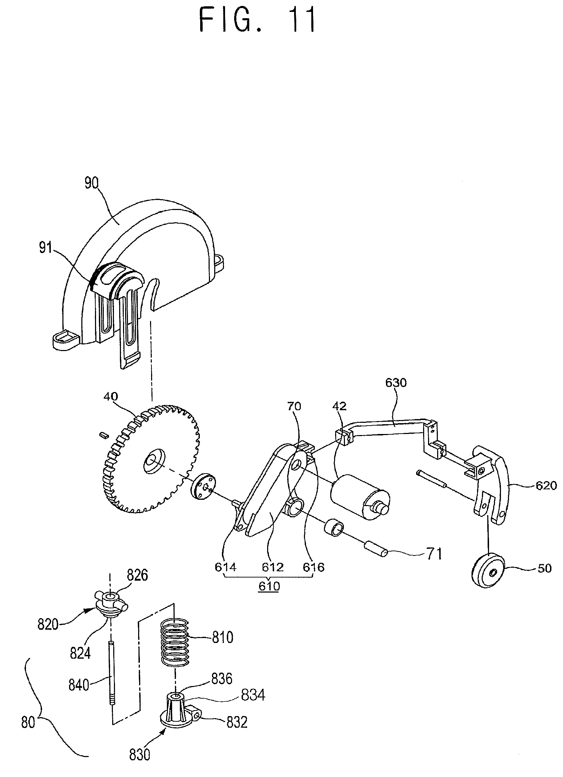

Referring to Figure 11 the suspension part 80 comprises an elastic member 810, and upper and lower holders 820 and 830 to hold the elastic member 810 at opposite ends thereof. The upper holder 820 is coupled to the main body frame 10 by a bracket cover 91 provided in wheel cover 90 for protecting the driving wheel 40.

The bracket cover 91 is formed on an inward surface of the wheel cover 90, so that the bracket cover 91 is not only placed in front of a main frame 610 but also spaced apart from the lower holder 830 by a predetermined distance.

The lower holder 830 is rotatably coupled to the main frame 610 by a hinge unit 832. The hinge unit 832 is connected to a hinge shaft 614' of the main frame 610. The lower holder 830 is connected to one side of the main frame 610 formed with a driving shaft part 614 connected to the driving wheel 40. That is, the interlocking hinge part 70 is disposed in a middle of the main frame 610, and the suspension part 80 is provided in an end part of the main frame 610 where the hinge shaft 614' is formed. Accordingly, the suspension part 80 is disposed the main body frame 10 to be spaced apart from the driving shaft part 614, thereby making the driving wheel 40 come into maximum contact with the travelling surface or the stair surface. Since an elastic force of the elastic member 810 of the suspension part 80 is applied to the hinge 614', the main frame 610 is biased to rotate the driving shaft 614 with respect to the interlocking hinge port 70, so that the driving wheel 40 is pressed downward.

The elastic member 810 is shaped like a coil and has a first end coupled to a second supporting projection 824 protruding downward from the upper holder 820, and a second end coupled to a supporting projection 834 protruding upward from the lower holder 830.

Further, a guide shaft 840 is provided between the upper holder 820 and the lower holder 830 along a stretching direction of the elastic member 810. The guide shaft 840 has a first end inserted in and coupled to the second holder 830 through a coupling hole 836 formed in the supporting projection 834 of the lower holder 830, and a second end supported in a through hole 826 of the upper holder 820, so that the elastic member 810 is not bent while being compressed between the upper and lower holders 820 and 830.

In the present embodiment, the upper holder 820 is supported by the bracket cover 91 of the wheel cover 90, but the invention is not limited to the configuration. Alternatively, the bracket cover 91 and the main body frame 10 may be formed as a single body, in which the bracket cover 91 protrudes from the main body frame 10 and faces the lower holder 830 at a predetermined distance therefrom.

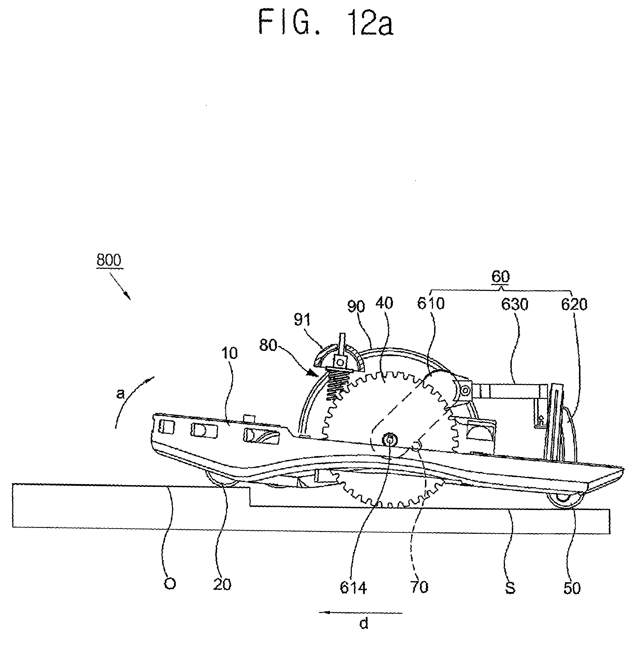

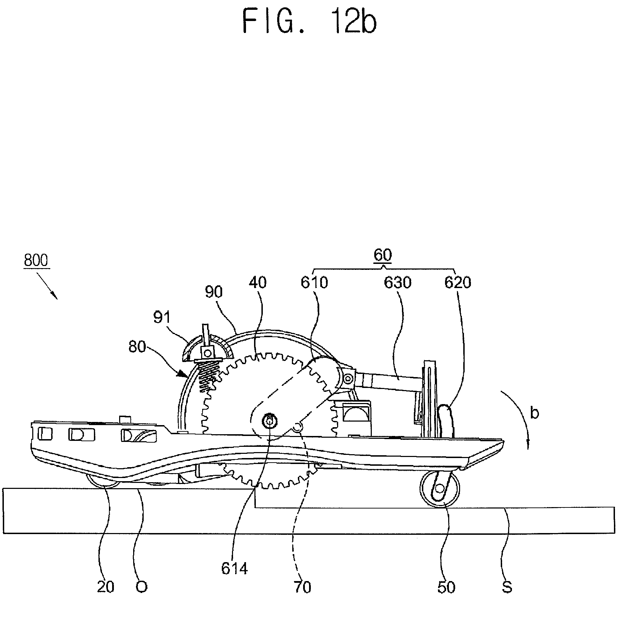

Hereinafter, an operation of the travelling robot 800 according to the present invention will be described, with reference to Figures 12A and 12B.

As illustrated in Figures 12A and 12B, the travelling robot 800 travels in direction "d" along a travelling surface S, the travelling surface S having a stair surface O protruding upwards therefrom. As the travelling robot 800 travels along the travelling direction "d" the front wheel 20 climbs on the stair surface O. At this time, the wheel frame 610 comprising the driving shaft part 614 is elastically biased by the elastic member 810 of the suspension part 80. Accordingly, the driving wheel 40 is elastically urged to come into maximum contact with the travelling surface S by the elastic member 810 while rotating with respect to the interlocking hinge part 70.

Referring to Figure 12B, as the travelling robot 1 further travels along the travelling direction "d," the driving wheel 40 climbs on the stair surface O, and the rear wheel 50 remains on the travelling surface S. At this time, the driving wheel 40 is elastically urged to come into maximum contact with the travelling surface S by the elastic member 810 while rotating with respect to the interlocking hinge part 70.

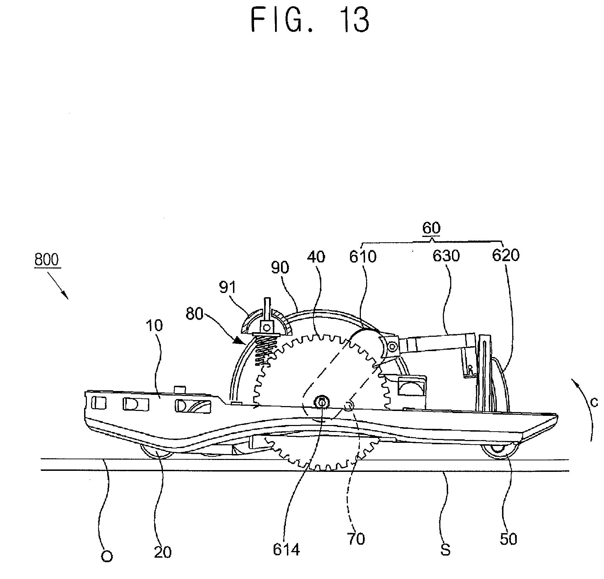

Referring now to Figure 13, a front wheel 20 and a rear wheel 50 of the travelling robot 800 travel on the stair surface O, but the driving wheel 40 travels on the travelling surface S. At this time, the wheel frame 60 rotates about the interlocking hinge part 70 with respect to the main body frame 10 in a direction "c"). Thus, the driving wheel 40 may protrude further toward the travelling surface S from the main body frame 10 to contact the travelling surface S. In this case, a weight of the main body frame 10 is properly distributed to the front wheel 20, the driving wheel 40, and the rear wheel 50, and so the driving wheel 40 could decrease in ability to be biased or pressed against the travelling surface S. However, because the wheel frame 610 having the driving shaft part 614 is elastically biased by the elastic member 810 of the suspension part 80, the driving wheel 40 is further urged to come into maximum contact with the travelling surface S by the elastic member 810 with respect to the interlocking hinge part 70.

As described above, the travelling robot according to the present invention can maintain sufficient traction force of the driving wheel and minimize shaking of the travelling robot, and thereby enhance the travelling ability thereof on an uneven surface formed with a stair or the like, since the driving wheel and the rear wheel are fixed relative to each other and the opposite travelling parts drive independently to be suitably adapted to the surface.

Further, the suspension part is provided between the main body and the driving wheel, so that the driving wheel is elastically biased toward the travelling surface, thereby allowing the driving wheel to have the maximum traction on the ground regardless of whether the weight centre of the travelling robot moves or not.

Also, the elastic member of the suspension part absorbs a shock of the driving wheel colliding with the travelling surface after climbing the stair surface, thereby protecting internal elements of the main body.

Although a few embodiments of the present invention have been shown and described, it will be appreciated by those skilled in the art that changes may be made in these embodiments without departing from the principles of the general inventive concept, the scope of which is defined in the appended claims hereafter.

## Claims

1. A conveyance mechanism for a mobile robot, comprising a main body, at least one front wheel **characterised by** first and second wheeled units, each wheeled unit comprising a driven wheel and a rear support wheel mounted to a support frame, each support frame being pivotably secured to the main body so as to pivot about an axis perpendicular to the direction of travel of the conveyance mechanism in use, wherein the first and second wheeled units are pivotable relative to the main body about parallel respective axes, independently of each other.

2. A conveyance mechanism according to claim 1 wherein the pivot axes of the first and second wheeled units are coaxial.

3. A conveyance mechanism according to claim 1 or claim 2 wherein the first and second wheeled units are disposed proximate lateral sides of the main body.

4. A conveyance mechanism according to any preceding claim wherein the first and second wheeled units are disposed symmetrically about a centre line of the main body.

5. A conveyance mechanism according to any preceding claim wherein the driven wheel and the rear support wheel of each wheeled unit are disposed on opposite sides of the respective support frame pivot.

6. A conveyance mechanism according to claim 5 wherein the driven wheel of each wheeled unit is disposed closer to the support frame pivot than the respective rear support wheel.

7. A conveyance mechanism according to any preceding claim wherein the first and second support frames each respectively comprise a driving wheel portion supporting the driving wheel, a rear wheel portion supporting the rear support wheel and, a link member linking the driving wheel and rear wheel portions.

8. A conveyance mechanism according to claim 7 wherein the first and second driving wheel portions respectively comprise a driving shaft supporting the driving wheel.

9. A conveyance mechanism according to claim 7 wherein the first and second driving wheel portions respectively comprise a driving motor connected to the driving wheel to provide driving power thereto.

10. A conveyance mechanism according to any preceding claim wherein each wheeled unit further comprises a respective suspension mechanism disposed between the main body and the support frame to elastically bias the driving wheel away from the main body.

11. A travelling robot comprising a main body frame having a front wheel supported in a front portion thereof in a travelling direction, a first travelling part having a first driving wheel to drive the main body frame in the travelling direction, a first rear wheel disposed in a rear side of the first driving wheel, and a first wheel frame to support the first driving wheel and the first rear wheel, a second travelling part having a second driving wheel to drive the main body frame in the travelling direction independently from the first driving wheel, a second rear wheel disposed in a rear side of the second driving wheel, and a second wheel frame to support the second driving wheel and the second rear wheel, a first interlocking hinge part to rotatably support the first wheel frame with respect to the main body frame to have a first hinge axis of a perpendicular direction with respect to the travelling direction and a second interlocking hinge part to rotatably support the second wheel frame with respect to the main body frame independently from the first interlocking hinge part to have a second hinge axis of the same direction as the first interlocking hinge part.

12. The travelling robot according to claim 1, wherein the first interlocking hinge part and the second interlocking hinge part are disposed to the main body frame through the first and second hinge axes respectively, and the first and second axes are disposed on a same line.

13. The travelling robot according to claim 2, wherein the first travelling part and the second travelling part are symmetrical with respect to the travelling direction.

14. The travelling robot according to claim 3, wherein the first interlocking hinge part and the second interlocking hinge part are disposed within a predetermined distance from a weight centre of the travelling robot in the travelling direction.

15. The travelling robot according to claim 4, wherein the first interlocking hinge part and the second interlocking hinge part are disposed backward in the travelling direction from the weight centre of the travelling robot.

16. The travelling robot according to claims 3 through 5, wherein the first wheel frame and the second wheel frame comprise main frames to respectively support the first driving wheel and the second driving wheel, sub frames to respectively support the first rear wheel and the second rear wheel, and linking members to respectively link the main frames with the sub frames.

17. The travelling robot according to claim 6, wherein the main frames comprise driving shaft parts to respectively support the first driving wheel and the second driving wheel, frame bodies respectively extending upward and backward in the travelling direction from the driving shaft parts, and coupling parts respectively coupled with the linking members.

18. A travelling robot comprising a main body frame having a front wheel supported in a front portion thereof in a travelling direction, a plurality of travelling parts each of which comprises a driving wheel, a rear wheel disposed in a rear side of the driving wheel, and a wheel frame to connect and support the driving wheel and the rear wheel, and which are driven independently from each other, an interlocking hinge part to rotatably support the wheel frame of the respective travelling parts to the main body frame and a suspension part provided between the main body frame and the wheel frame to allow the driving wheel to be elastically biased toward a travelling surface.

19. The travelling robot according to claim 8, wherein the wheel frame comprises a main frame to support the driving wheel, a sub frame to support the rear wheel, and a linking member to link the main frame with the sub frame, the interlocking hinge part is provided between opposite end parts of the main frame, and the suspension part is coupled to the main frame such that the driving wheel is disposed between the interlocking hinge part and the suspension part.

20. The travelling robot according to claim 9, wherein the main body frame comprises a bracket cover, and the suspension part comprises an upper holder supported by the bracket cover provided in the main body frame, a lower holder rotatably supported by the main frame, an elastic member interposed between the upper and lower holders and a guide shaft provided between the upper and lower holders along a stretching direction of the elastic member to prevent the elastic member from being bent.

21. The travelling robot according to claim 20, wherein the bracket cover protrudes from the main body frame and is spaced apart from the lower holder at a predetermined distance.

22. The travelling robot according to claim 20, wherein the main body frame comprises a wheel cover, and the bracket cover is provided in the wheel cover detachably coupled to the main body frame.

23. A travelling robot comprising a main body frame having a front wheel formed at a front portion thereof, and having a shaft formed at a middle portion thereof, a main frame rotatably connected to the shaft, a driving wheel rotatably connected to a first end of the main frame and a rear wheel connected to a second end of the main frame to be disposed at a rear portion of the main body frame.

24. The travelling robot according to claim 23, wherein the first end and the second end are disposed opposite to each other with respect to the shaft.

25. The travelling robot according to claim 23, wherein the first end is lower than the shaft and the second end is higher than the shaft.

26. The travelling robot according to claim 23, wherein the first end is spaced apart from the shaft by a first distance and the second end is spaced apart from the shaft by a second distance longer than the first distance.

27. The travelling robot according to claim 23, wherein the front wheel and the rear wheel comprise a rotation shaft lower than a reference plane of the main body frame, and the shaft is disposed higher than the reference plane.

28. The travelling robot according to claim 23, wherein the front wheel, the driving wheel, and the rear wheel are disposed in order in a travelling direction of the main body frame.

29. The travelling robot according to claim 23, wherein when the front wheel is lifted, the front portion is lifted and the main frame rotates with respect to the shaft of the main body frame.

30. The travelling robot according to claim 23, wherein when the front wheel and the front portion is lifted, the main body portion rotates about the driving wheel.

31. The travelling robot according to claim 23, further comprising a suspension part connected between another middle portion of the main body frame and a third end of the main frame to bias the first end of the main frame with respect to the shaft.

32. The travelling robot according to claim 31, wherein the first end is spaced apart from the shaft by a first distance, and the third end is spaced apart from the shaft by another distance longer than the distance.

33. A travelling robot comprising a main body frame having a front wheel supported in a front portion thereof, and first and second shaft formed in a middle portion thereof, a first travelling part having a first wheel frame rotatably connected to the first shaft, a first driving wheel rotatably connected to a first end of the first wheel frame, and a first rear wheel rotatably connected to a second end of the first wheel frame, a second travelling part having a second wheel frame rotatably connected to the second shaft, a second driving wheel rotatably connected to a first end of the second wheel frame, and second rear wheel rotatably connected to a second end of the second wheel frame, a first interlocking part to rotatably support the first wheel frame with respect to the first shaft and a second interlocking part to rotatably support the second wheel frame with respect to the second shaft.

34. A travelling robot comprising a main body frame having a front wheel supported in a front portion thereof, and a shaft formed in a middle portion thereof, a travelling part having a wheel frame rotatably connected to the shaft, a driving wheel rotatably connected to a first end of the wheel frame, and a rear wheel rotatably connected to a second end of the wheel frame and an interlocking part connected to the shaft and the wheel frame to rotatably support the wheel frame with respect to the main body frame.
